# EUROPEAN PATENT APPLICATION

(11) **EP 2 418 228 A1**
(43) Date of publication of application: **15.02.2012**
(21) Application number: 10761727.6
(22) Date of filing: 07.04.2010
(51) Int. Cl.: C08F 10/14, C08F 4/6592

(54) **A-OLEFIN OLOGIMER AND METHOD FOR PRODUCING SAME**

(30) Priority: 10.04.2009 JP 2009096327
(71) Applicant: Idemitsu Kosan Co., Ltd., Chiyoda-ku Tokyo 100-8321 (JP)
(72) Inventor: FUJIMURA, Takenori, Ichihara-shi Chiba 299-0193 (JP); MINAMI, Yutaka, Ichihara-shi Chiba 299-0193 (JP); OKAMOTO, Takuji, Ichihara-shi Chiba 299-0193 (JP)
(74) Representative: Vossius & Partner
(86) International application number: PCT/JP2010/056337
(87) International publication number: WO 2010/117028

(57) **Abstract**

Disclosed are an α-olefin oligomer including 90 mol% or more of an α-olefin unit having 6 or more carbon atoms and having a small amount of a dimer component, in which a mass ratio of a dimer, a trimer and a tetramer is specified and which does not follow the Schulz-Flory distribution, and a process for producing the same.

## Description

### TECHNICAL FIELD

The present invention relates to an α-olefin oligomer and a process for producing the same. In more detail, the present invention relates to an α-olefin oligomer which is useful as a wax component or a lubricating oil component and a process for producing the same.

### BACKGROUND ART

In recent years, α-olefin oligomers have been produced using a metallocene based catalyst and used as a wax component or a lubricating oil component. For example, Patent Document 1 discloses a polymer obtained by polymerizing a higher α-olefin having 10 or more carbon atoms by using a metallocene based catalyst, and in working examples thereof, a catalyst using a double-crosslinked complex in a racemic form is used. Patent Document 2 discloses a production method of an α-olefin polymer by polymerizing an α-olefin having 4 or more carbon atoms by using a metallocene based catalyst, and in working examples thereof, a catalyst using a double-crosslinked complex in a meso-symmetric form having two different crosslinking groups is used.

In the light of the above, although α-olefin oligomers have been produced using a metallocene based catalyst until now, in conventional systems using a metallocene based catalyst, selectivity of a product generally follows the prescribed rules (Schulz-Flory distribution, see Non-Patent Documents 1 and 2), and therefore, in the production of a low molecular weight region, a large amount of a dimer was produced. In the case where a large amount of a dimer component is contained in an α-olefin oligomer, as for liquid oligomers, there was encountered such a problem that an increase of VOC (volatile organic compound) components is resulted, and as for solid oligomers, there was encountered such a problem that a lowering of melting point is caused due to a dimer component, and a melting point distribution is widened. For example, in the case where a large amount of a dimer component is contained in an α-olefin oligomer having 16 or more carbon atoms, since the dimer component has 32 or more carbon atoms, the subject component is difficult to be removed by means of an operation such as distillation and the like and remains in the product. For that reason, there may have been the case where a problem that when a large amount of a dimer component is present, a lowering of melting point is caused, and a melting point distribution is widened, and therefore, a tacky component increases; or a problem that a melting point of the dimer component is lower by about 10°C than a melting point of polymer components, and hence, an oligomer containing a large amount of a dimer component does not exhibit a desired melting point, is caused.

Also, when used as a wax component or a lubricating oil component, α-olefin oligomers having a relatively low weight average molecular weight and a small molecular weight distribution value are preferable. The α-olefin oligomers obtained in the methods described in the foregoing patent documents 1 and 2 are not satisfactory, too as for these properties, and more enhancements of performances are desired.

### PRIOR ART DOCUMENTS

### PATENT DOCUMENTS

Patent Document 1: WO03/0707
Patent Document 2: JP-A-2001-335607

### NON-PATENT DOCUMENTS

Non-Patent Document 1 : J. Am. Chem. Soc., 1940, 62(6), 1561 to 1565
Non-Patent Document 2: Adv. Polymer Sci., 1974, 15(1), 1 to 30

### SUMMARY OF THE INVENTION

### PROBLEMS TO BE SOLVED BY THE INVENTION

In view of the foregoing circumstances, the present invention has been made, and an object thereof is to provide an α-olefin oligomer with a small amount of a dimer component without following the Schulz-Flory distribution and a process for producing the same. Furthermore, an object of the present invention is to provide an α-olefin oligomer having a relatively low weight average molecular weight and a small molecular weight distribution value and a process for producing the same.

### MEANS FOR SOLVING THE PROBLEMS

The present inventors made extensive and intensive investigations. As a result, they have found a production condition under which the foregoing problems can be solved, leading to accomplishment of the present inventions. That is, the present invention is concerned with the following α-olefin oligomer and process for producing an α-olefin oligomer.
1. An α-olefin oligomer comprising 90 mol% or more of an α-olefin unit having 6 or more carbon atoms and satisfying any one of the following (1) to (3).
   (1) In a composition distribution where a mass ratio is dimer > trimer > tetramer, a trimer/dimer mass ratio is equal to or more than a tetramer/trimer mass ratio;
   (2) In a composition distribution where a mass ratio is dimer < trimer < tetramer, a trimer/dimer mass ratio is equal to or more than a tetramer/trimer mass ratio; and
   (3) In a composition distribution where a mass ratio is dimer < trimer > tetramer, a mass of the dimer is not more than 90 % of a mass of the trimer.
2. An α-olefin oligomer comprising 90 mol% or more of an α-olefin unit having 6 or more carbon atoms, having a weight average molecular weight (Mw) of not more than 9,000 and a molecular weight distribution (Mw/Mn) of not more than 2.0, and satisfying the following (4) and (5).
   (4) A timer/dimer mass ratio of 1.0 or more; and
   (5) A dimer/trimer mass ratio is equal to or less than a trimer/tetramer mass ratio.
3. The α-olefin oligomer as set forth above in 1 or 2, having a vinylidene group in a number of from 0.2 to 1.0 per molecule.
4. A process for producing an α-olefin oligomer comprising polymerizing an α-olefin having 6 or more carbon atoms in the presence of a polymerization catalyst containing (A) a transition metal compound represented by the following formula (I) and (B) at least one component selected from (B-1) a compound capable of reacting with the transition metal compound as the component (A) or a derivative thereof to form an ionic complex and (B-2) an aluminoxane.

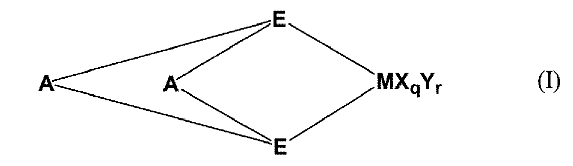

[The compound represented by the formula (I) is a compound in a meso-symmetric form; and in the formula (I), M represents a metal element belonging to any one of the Groups 3 to 10 of the periodic table. X represents a σ-bonding ligand, and when plural Xs are present, each X may be the same as or different from every other X; and Y represents a Lewis base, and when plural Ys are present, each Y may be the same as or different from every other Y. A represents a crosslinking group selected from a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, -SO₂-, -Se-, -NR¹-, -PR¹-, -P(O)R¹-, -BR¹-, and -AlR¹-, and two As are the same as each other. R¹ represents a hydrogen atom, a halogen atom, a hydrocarbon group having from 1 to 20 carbon atoms, or a halogen-containing hydrocarbon group having from 1 to 20 carbon atoms. q is an integer of from 1 to 5 and represents [(valence of M) - 2], and r represents an integer of from 0 to 3. E represents a group represented by the following formula (II) or (III), and two Es are the same as each other.]

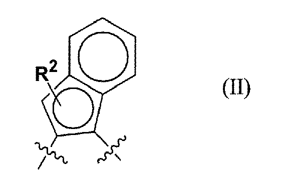

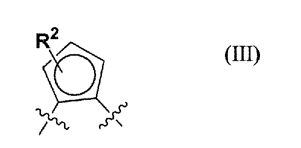

[In the formulae (II) and (III), each R² independently represents a group selected from a hydrogen atom, a halogen atom, a hydrocarbon group having from 1 to 20 carbon atoms, a halogen-containing hydrocarbon group having from 1 to 4 carbon atoms, a silicon-containing group, and a hetero atom-containing group. When plural R²s are present, each R² may be the same as or different from every other R². A bond having a wave line represents the crosslinking group A.]
5. The process for producing an α-olefin oligomer as set forth above in 4, wherein the crosslinking group A in the formula (I) is a group represented by the following formula (IV).

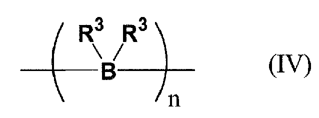

[B is a skeleton of the crosslinking group and represents a carbon atom, a silicon atom, a boron atom, a nitrogen atom, a germanium atom, a phosphorus atom, or an aluminum atom. R³ is a substituent of B and represents a hydrogen atom, a carbon atom, an oxygen atom, an aliphatic hydrocarbon group, an aromatic hydrocarbon group, an amine-containing group, or a halogen-containing group. n is 1 or 2.]
6. The process for producing an α-olefin oligomer as set forth above in 4 or 5, wherein a polymerization catalyst composed of (C) an organoaluminum component in addition to the component (A) and the component (B) is used.
7. The process for producing an α-olefin oligomer as set forth above in any one of 4 to 6, wherein a polymerization catalyst obtained by previously bringing the component (A), the component (B) and an α-olefin having from 3 to 18 carbon atoms into contact with each other is used.
8. The process for producing an α-olefin oligomer as set forth above in 6, wherein a polymerization catalyst obtained by previously bringing the component (A), the component (B), the component (C) and an α-olefin having from 3 to 18 carbon atoms into contact with each other is used.
9. The process for producing anα-olefin oligomer as set forth above in any one of 4 to 8, wherein the reaction is carried out at a temperature of from 0 to 200°C.
10. The process for producing an α-olefin oligomer as set forth above in any one of 4 to 9, wherein the reaction is carried out under a hydrogen pressure in the range of from 0 to 10 MPa(G).
11. The process for producing an α-olefin oligomer as set forth above in 6, wherein an organoaluminum compound having a hydrocarbon group having 4 or more carbon atoms bonded thereto is used as the organoaluminum compound (C).
12. The process for producing an α-olefin oligomer as set forth above in any one of 4 to 11, wherein the α-olefin oligomer is an α-olefin oligomer comprising 90 mol% or more of an α-olefin unit having 6 or more carbon atoms and satisfying any one of the following (1) to (3).
   (1) In a composition distribution where a mass ratio is dimer > trimer> tetramer, a trimer/dimer mass ratio is equal to or more than a tetramer/trimer mass ratio;
   (2) In a composition distribution where a mass ratio is dimer < trimer < tetramer, a trimer/dimer mass ratio is equal to or more than a tetramer/trimer mass ratio; and
   (3) In a composition distribution where a mass ratio is dimer < trimer > tetramer, a mass of the dimer is not more than 90 % of a mass of the trimer.
13. The process for producing an α-olefin oligomer as set forth above in any one of 4 to 11, wherein the α-olefin oligomer is an α-olefin oligomer comprising 90 mol% or more of an α-olefin unit having 6 or more carbon atoms, having a weight average molecular weight (Mw) of not more than 9,000 and a molecular weight distribution (Mw/Mn) of not more than 2.0, and satisfying the following (4) and (5):
   (4) A timer/dimer mass ratio of 1.0 or more; and
   (5) A dimer/trimer mass ratio is equal to or less than a trimer/tetramer mass ratio.

### EFFECT OF THE INVENTION

According to the present invention, there are provided an α-olefin oligomer with a small amount of a dimer component without following the Schulz-Flory distribution and a process for producing the same. Furthermore, according to the present invention, there are provided an α-olefin oligomer having a relatively low weight average molecular weight and a small molecular weight distribution value and a process for producing the same. Such an α-olefin oligomer is useful as a wax component or a lubricating oil component.

### MODES FOR CARRYING OUT THE INVENTION

### [α-Olefin oligomer]

The α-olefin oligomer of the present invention is an α-olefin oligomer comprising 90 mol% or more of an α-olefin unit having 6 or more carbon atoms on the basis of the whole of monomer units and having a small amount of a dimer component without following the Schulz-Flory distribution.

In the α-olefin oligomer of the present invention, the α-olefin unit having 6 or more carbon atoms is preferably 100 mol%. Examples of other monomer unit than the α-olefin unit having 6 or more carbon atoms include α-olefin units having not more than 5 carbon atoms. As for an application for lubricating oil, the α-olefin unit having 6 or more carbon atoms is preferably an α-olefin having from 8 to 14 carbon atoms, and more preferably an α-olefin having from 8 to 12 carbon atoms. As for an application for wax (crystalline), the α-olefin unit having 6 or more carbon atoms is preferably an α-olefin having from 14 to 40 carbon atoms, and more preferably an α-olefin having from 16 to 36 carbon atoms. Specific examples of the α-olefin unit having 6 or more carbon atoms include 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicocene, 1-tetracocene, 1-hexacocene, 1-octacocene, 1-triacontene, and so on. One kind or two or more kinds thereof can be used. In the present invention, when such a raw material monomer is used, an α-olefin oligomer which is useful as a wax component or a lubricating oil component is obtained.

As the α-olefin oligomer of the present invention, there can be exemplified the following α-olefin oligomer I or α-olefin oligomer II. The α-olefin oligomer I is an α-olefin oligomer comprising 90 mol% or more of an α-olefin unit having 6 or more carbon atoms and satisfying any one of the following (1) to (3).
(1) In a composition distribution where a mass ratio is dimer > trimer > tetramer, a trimer/dimer mass ratio is equal to or more than a tetramer/trimer mass ratio;
(2) In a composition distribution where a mass ratio is dimer < trimer < tetramer, a trimer/dimer mass ratio is equal to or more than a tetramer/trimer mass ratio; and
(3) In a composition distribution where a mass ratio is dimer < trimer > tetramer, a mass of the dimer is not more than 90 % of a mass of the trimer.

In the case where the α-olefin oligomer I has a composition distribution where a mass ratio is dimer > trimer > tetramer, a relation that a trimer/dimer mass ratio is equal to or more than a tetramer/trimer mass ratio is satisfied. The case where the trimer/dimer mass ratio is less than the tetramer/trimer mass ratio is in a state where a large amount of a dimer component is produced. In such case, even when a purification treatment is carried out after the production, a problem that an α-olefin oligomer which is suited for a desired application is not obtained, or a problem of environmental degradation to be caused due to a lowering of productivity or an increase of wastes, is caused. Also, in an α-olefin oligomer having 16 carbon atoms or more, in the case where a large amount of a dimer component is contained, in view of the fact that the dimer component becomes a component having 32 carbon atoms or more, such a dimer component is difficult to be removed by means of an operation such as distillation and the like and remains in the product. For that reason, when a large amount of a dimer component is present, there is caused such a problem that a lowering of melting point is caused, and the melting point distribution is widened, and hence, a tacky component increases. A content of the dimer component is preferably not more than 30 % by mass because such a problem can be easily solved.

In the case where the α-olefin oligomer I has a composition distribution where a mass ratio is dimer < trimer < tetramer, a relation that a trimer/dimer mass ratio is equal to or more than a tetramer/trimer mass ratio is satisfied. When the subject prescription is satisfied, the α-olefin oligomer of the invention of the present application has a more reduced content of the dimer component and a small molecular weight distribution value and becomes close to a uniform composition. As a result, an α-olefin oligomer which is useful as a wax or lubricating oil component can be obtained because a product having a desired viscosity region can be obtained, and it does not substantially contain a performance-decrementing component.

In the case where the α-olefin oligomer I has a composition distribution where a mass ratio is dimer < trimer > tetramer, a mass of the dimer is not more than 90 % of a mass of the trimer. The case where the mass of the dimer is more than 90 % is in a state where the contents of all of the dimer to the tetramer are substantially equal to each other, and a very large amount of the dimer component is contained. For that reason, even when a purification treatment is carried out after the production, a problem that an α-olefin oligomer which is suited for a desired application is not obtained, or a problem of environmental degradation to be caused due to a lowering of productivity or an increase of wastes, is caused. Also, in an α-olefin oligomer having 16 carbon atoms or more, in the case where a large amount of a dimer component is contained, in view of the fact that the dimer component becomes a component having 32 carbon atoms or more, such a dimer component is difficult to be removed by means of an operation such as distillation and the like and remains in the product. For that reason, when a large amount of a dimer component is present, there is caused such a problem that a lowering of melting point is caused, and the melting point distribution is widened, and hence, a tacky component increases.
Each of the cases (1) to (3) is largely influenced by a structure of the catalyst, a raw material species and a polymerization condition. In particular, as described later, in the transition metal compound, so far as not only the two crosslinking groups are identical, but the structures of the two (substituted) cyclopentadienyl groups [or (substituted) indenyl groups] are identical, it becomes possible to control the stereoregularity at the time of an insertion reaction of the monomer into the catalyst, and an α-olefin oligomer having a relatively low weight average molecular weight and narrow molecular weight distribution value and composition distribution can be produced. Also, as items related to the characteristic features of the α-olefin oligomer of the invention of the present application, there are a stereostructure of the catalyst and a structure of the raw material monomer. According to these, an oligomer having a composition distribution in which the content of an even-numbered oligomer (in particular, a dimer) decreases, and the content of an odd-number oligomer (in particular, a trimer or the like) increases is obtained. For that reason, so far as the same condition is concerned, the larger the monomer molecule, the more decreased the amount of the produced dimer is, so that the case (3) is easily revealed from the case (1). Also, so far as the same monomer is concerned, the case (2) is easily revealed by controlling the polymerization condition.
The contents of the dimer, the trimer and the tetramer can be, for example, determined by using gas chromatography (GC).

A weight average molecular weight (Mw) of the α-olefin oligomer I is usually not more than 9, 000, preferably from 100 to 9,000, more preferably from 300 to 7,000, and especially preferably from 500 to 5,000. When the weight average molecular weight (Mw) is not more than 9,000, the viscosity does not become excessively high, and the characteristic features as a low molecular weight material are revealed.
A molecular weight distribution (Mw/Mn) of the α-olefin oligomer I is usually not more than 2.0, preferably from 1.0 to 1. 5, and more preferably from 1.1 to 1.4. When the molecular weight distribution (Mw/Mn) is not more than 2.0, the composition distribution becomes narrow, and the content of a compound having desired properties increases.
Incidentally, the weight average molecular weight (Mw) and the molecular weight distribution (Mw/Mn) can be determined by means of a GPC method.

The α-olefin oligomer II is an α-olefin oligomer comprising 90 mol% or more of an α-olefin unit having 6 or more carbon atoms, having a weight average molecular weight (Mw) of not more than 9,000 and a molecular weight distribution (Mw/Mn) of not more than 1.5, and satisfying the following (4) and (5).
(4) A timer/dimer mass ratio of 1.0 or more; and
(5) A dimer/trimer mass ratio is equal to or less than a trimer/tetramer mass ratio.

A weight average molecular weight (Mw) of the α-olefin oligomer II is preferably from 100 to 9,000, more preferably from 300 to 7, 000, and especially preferably from 500 to 5, 000 . When the weight average molecular weight (Mw) is not more than 9, 000, the viscosity does not become excessively high, and the characteristic features as a low molecular weight material are revealed. A molecular weight distribution (Mw/Mn) is preferably from 1.0 to 1.5, and more preferably from 1.1 to 1.5. When the molecular weight distribution (Mw/Mn) is not more than 1.5, the composition distribution becomes narrow, and the content of a compound having desired properties increases.
In the case where the trimer/dimer mass ratio is less than 1.0, there is caused such a problem that as for liquid oligomers, the VOC components increase, and as for crystalline oligomers, the melting point distribution becomes wide. From the subject viewpoint, the trimer/dimer mass ratio is more preferably 1.1 or more.
The case where the dimer/trimer mass ratio is more than the trimer/tetramer mass ratio is in a state where a large amount of a dimer component is produced. In such case, even when a purification treatment is carried out after the production, a problem that an α-olefin oligomer which is suited for a desired application is not obtained, or a problem of environmental degradation to be caused due to a lowering of productivity or an increase of wastes, is caused.

The α-olefin oligomer of the present invention is usually one having a vinylidene group in a number of from 0.2 to 1.0 per molecule, preferably one having a vinylidene group in a number of from 0.3 to 1.0 per molecule, and more preferably one having a vinylidene group in a number of from 0.5 to 1.0 per molecule. In the case of imparting polarity to the α-olefin oligomer, in view of the fact that the vinylidene group number falls within the foregoing range, a modification treatment can be easily carried out, thereby achieving an object thereof. The α-olefin oligomer having been subjected to the subject modification treatment is especially useful as a wax component. In order to make the vinylidene group number fall within the foregoing range, a reaction condition such as temperature, hydrogen amount and the like may be adjusted.

As a preferred example of the case of using the α-olefin oligomer of the present invention as a wax component, there is exemplified an α-olefin oligomer which is obtained using an α-olefin having from 14 to 40 carbon atoms and in which a melting point obtained by DSC falls within the range of from 0 to 100°C, and the melting point is single and has a half value width of not more than 15°C. The half value width is preferably not more than 12°C, and more preferably not more than 10°C. So far as an α-olefin oligomer satisfying the subject requirements is concerned, it has sharp melt properties, and therefore, it is useful as a wax component. In order to obtain such an α-olefin oligomer, stereocontrol of an oligomer structure due to the catalyst may be applied.

The α-olefin oligomer of the present invention is useful chiefly as a wax component and a lubricating oil component, and in particular, useful as a release agent for toner and an ink component, a modifier of resin, a pressure-sensitive adhesive component, an adhesive component, a lubricating oil component, an organic-inorganic composite material, a heat storage material, a modifier of fuel oil such as light oil and the like, a modifier of asphalt, or a high performance wax. In addition to the above, the α-olefin oligomer of the present invention is also useful as a component for cosmetics (e.g., lipstick, hair oil, cream, eyebrow pencil, eye shadow, brilliantine, facial mask, hair shampoo, and hair conditioner), a medical material (e.g., ointment, suppository, emulsion, surgical bandage, and wet compress), stationery use (such as crayon, pastel crayon, pencil, and carbon paper), a glazing agent (for wood, furniture, leather, automobile, paper, confectionery, and fibers), a candle, a cream for leather, textile oil, a confectionery material, a model material, a sculpture material, a leather finishing material, wax paper for an insulating material, a musical instrument, a printing material for a brazing material for tree grafting, a material for producing a casting mold, wax coating for fruits, various kinds of grease, a ski wax, battik dyeing, a polishing agent, a car wax, a metalworking oil, an anti-aging agent for rubber, a tire, an adhesive, processed paper, a heat storage agent, an agrichemical, a fertilizer, an abrasive agent (for metals and stainless steel), an oily lubricant (such as grease, a release agent, and a paint), a dental wax, a fixing material (for a lens and embedding), and the like.

### [Production method of α-olefin oligomer]

The α-olefin oligomer of the present invention can be produced by using a catalyst containing a specified transition metal compound having meso symmetry, and for example, it can be produced by polymerizing the foregoing α-olefin in the presence of a polymerization catalyst containing (A) a transition metal compound represented by the following formula (I) and (B) at least one component selected from (B-1) a compound capable of reacting with the transition metal compound as the component (A) or a derivative thereof to form an ionic complex and (B-2) an aluminoxane.

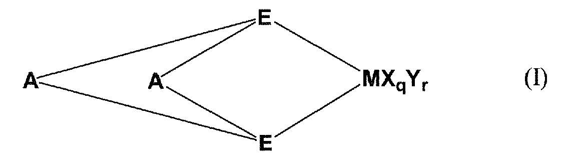

The compound represented by the formula (I) is a compound in a meso-symmetric form; and in the formula (I), M represents a metal element belonging to any one of the Groups 3 to 10 of the periodic table. X represents a α-bonding ligand, and when plural Xs are present, each X may be the same as or different from every other X; and Y represents a Lewis base, and when plural Ys are present, each Y may be the same as or different from every other Y. A represents a crosslinking group selected from a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, -SO₂-, -Se-, -NR¹-, -PR¹-, -P(O)R¹-, -BR¹-, and -AlR¹-, and two As are the same as each other. R¹ represents a hydrogen atom, a halogen atom, a hydrocarbon group having from 1 to 20 carbon atoms, or a halogen-containing hydrocarbon group having from 1 to 20 carbon atoms. q is an integer of from 1 to 5 and represents [(valence of M) - 2], and r represents an integer of from 0 to 3. E represents a group represented by the following formula (II) or (III), and two Es are the same as each other.
Incidentally, the foregoing compound in a meso-symmetric form means a transition metal compound in which the two crosslinking groups crosslink the two Es with each other in a (1,1') (2,2') bonding mode.

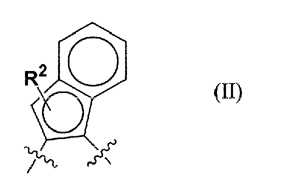

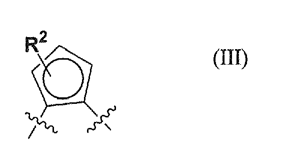

In the formulae (II) and (III), R² represents a group selected from a hydrogen atom, a halogen atom, a hydrocarbon group having from 1 to 20 carbon atoms, a halogen-containing hydrocarbon group having from 1 to 4 carbon atoms, a silicon-containing group and a hetero atom-containing group. When plural R²s are present, each R² may be the same as or different from every other R². A bond having a wave line represents a bond to the crosslinking group A. Specific examples of R² are shown below.

Examples of the halogen atom include a chlorine atom, a fluorine atom, a bromine atom, and an iodine atom.
Examples of the hydrocarbon group having from 1 to 20 carbon atoms include an alkyl group such as a methyl group, an ethyl group, a propyl group, a butyl group, a hexyl group, a cyclohexyl group, an octyl group, and the like; an alkenyl group such as a vinyl group, a propenyl group, a cyclohexenyl group, and the like; an arylalkyl group such as a benzyl group, a phenylethyl group, a phenylpropyl group, and the like; an aryl group such as a phenyl group, a tolyl group, a dimethylphenyl group, a trimethylphenyl group, an ethylphenyl group, a propylphenyl group, a biphenyl group, a naphthyl group, a methylnaphthyl group, an anthracenyl group, a phenanthnyl group, and the like; and so on.
Specific examples of the halogen-containing hydrocarbon group having from 1 to 4 carbon atoms include a chloromethyl group, a bromomethyl group, a bromoethyl group, a p-fluorophenyl group, a p-fluorophenylmethyl group, a 3,5-difluorophenyl group, a pentachlorophenyl group, a 3,4,5-trifluorophenyl group, a pentafluorophenyl group, a 3,5-bis(trifluoromethyl)phenyl group, and so on.

Examples of the silicon-containing group include a monohydrocarbon-substituted silyl group such as a methylsilyl group, a phenylsilyl group, and the like; a dihydrocarbon-substituted silyl group such as a dimethylsilyl group, a diphenylsilyl group, and the like; a trihydrocarbon-substituted silyl group such as a trimethylsilyl group, a triethylsilyl group, a tripropylsilyl group, a dimethyl(t-butyl)silyl group, a tricyclohexylsilyl group, a triphenylsilyl group, a dimethylphenylsilyl group, a methyldiphenylsilyl group, a tritolylsilyl group, a trinaphthylsilyl group, and the like; a hydrocarbon-substituted silyl ether group such as a trimethylsilyl ether group and the like; a silicon-substituted alkyl group such as a trimethylsilylmethyl group and the like; a silicon-substituted aryl group such as a trimethylsilylphenyl group and the like; a dimethylhydrosilyl group; a methyldihydrosilyl group; and so on.
Examples of the hetero atom-containing group include an alkylamide group such as a dimethylamide group, a diethylamide group, a dipropylamide group, a dibutylamide group, a dicyclohexylamide group, a methylethylamide group, and the like; an alkenylamide group such as a divinylamide group, a dipropenylamide group, a dicyclohexenylamide group, and the like; an arylalkylamide group such as a dibenzylamide group, a phenylethylamide group, a phenylpropylamide group, and the like; an arylamide group such as a diphenylamide group, a dinaphthylamide group, and the like; an alkoxy group such as a methoxy group, an ethoxy group, a propoxy group, a butoxy group, a phenylmethoxy group, a phenylethoxy group, and the like; an aryloxy group having from 6 to 20 carbon atoms such as a phenoxy group, a methylphenoxy group, a dimethylphenoxy group, and the like; a phosphide group such as a dimethyl phosphide group, a methylphenyl phosphide group, a diphenyl phosphide group, a dicyclohexyl phosphide group, a dibenzyl phosphide group, and the like; an alkyl sulfide group such as a methyl sulfide group, an ethyl sulfide group, a propyl sulfide group, a butyl sulfide group, a hexyl sulfide group, a cyclohexyl sulfide group, an octyl sulfide group, and the like; an alkenyl sulfide group such as a vinyl sulfide group, a propenyl sulfide group, a cyclohexenyl sulfide group, and the like; an arylalkyl sulfide group such as a benzyl sulfide group, a phenylethyl sulfide group, a phenylpropyl sulfide group, and the like; an aryl sulfide group such as a phenyl sulfide group, a tolyl sulfide group, a dimethylphenyl sulfide group, a trimethylphenyl sulfide group, an ethylphenyl sulfide group, a propylphenyl sulfide group, a biphenyl sulfide group, a naphthyl sulfide group, a methylnaphthyl sulfide group, an anthracenyl sulfide group, a phenanthnyl sulfide group, and the like; a dimethyl boryl group; a diphenyl boryl group; a dimethyl arsenyl group; and so on.

The crosslinking group A in the formula (I) is preferably a group represented by the following formula (IV).

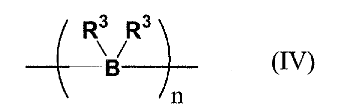

B is a skeleton of the crosslinking group and represents a carbon atom, a silicon atom, a boron atom, a nitrogen atom, a germanium atom, a phosphorus atom, or an aluminum atom. R³ represents a group selected from a hydrogen atom, a halogen atom, a hydrocarbon group having from 1 to 20 carbon atoms, a halogen-containing hydrocarbon group having from 1 to 4 carbon atoms, a silicon-containing group, a hetero atom-containing group, and an amine-containing group. n is 1 or 2. Specific examples of R³ are shown below.

Examples of the halogen atom include a chlorine atom, a fluorine atom, a bromine atom, and an iodine atom.
Examples of the hydrocarbon group having from 1 to 20 carbon atoms include an alkyl group such as a methyl group, an ethyl group, a propyl group, a butyl group, a hexyl group, a cyclohexyl group, an octyl group, and the like; an alkenyl group such as a vinyl group, a propenyl group, a cyclohexenyl group, and the like; an arylalkyl group such as a benzyl group, a phenylethyl group, a phenylpropyl group, and the like; an aryl group such as a phenyl group, a tolyl group, a dimethylphenyl group, a trimethylphenyl group, an ethylphenyl group, a propylphenyl group, a biphenyl group, a naphthyl group, a methylnaphthyl group, an anthracenyl group, a phenanthnyl group, and the like; and so on.
Specific examples of the halogen-containing hydrocarbon group having from 1 to 4 carbon atoms include a chloromethyl group, a bromomethyl group, a bromoethyl group, a p-fluorophenyl group, a p-fluorophenylmethyl group, a 3,5-difluorophenyl group, a pentachlorophenyl group, a 3,4,5-trifluorophenyl group, a pentafluorophenyl group, a 3,5-bis(trifluoromethyl)phenyl group, and so on.

Examples of the silicon-containing group include a monohydrocarbon-substituted silyl group such as a methylsilyl group, a phenylsilyl group, and the like; a dihydrocarbon-substituted silyl group such as a dimethylsilyl group, a diphenylsilyl group, and the like; a trihydrocarbon-substituted silyl group such as a trimethylsilyl group, a triethylsilyl group, a tripropylsilyl group, a dimethyl(t-butyl)silyl group, a tricyclohexylsilyl group, a triphenylsilyl group, a dimethylphenylsilyl group, a methyldiphenylsilyl group, a tritolylsilyl group, a trinaphthylsilyl group, and the like; a hydrocarbon-substituted silyl ether group such as a trimethylsilyl ether group and the like; a silicon-substituted alkyl group such as a trimethylsilylmethyl group and the like; a silicon-substituted aryl group such as a trimethylsilylphenyl group and the like; a dimethylhydrosilyl group; a methyldihydrosilyl group; and so on.
Examples of the hetero atom-containing group include an alkylamide group such as a dimethylamide group, a diethylamide group, a dipropylamide group, a dibutylamide group, a dicyclohexylamide group, a methylethylamide group, and the like; an alkenylamide group such as a divinylamide group, a dipropenylamide group, a dicyclohexenylamide group, and the like; an arylalkylamide group such as a dibenzylamide group, a phenylethylamide group, a phenylpropylamide group, and the like; an arylamide group such as a diphenylamide group, a dinaphthylamide group, and the like; an alkoxy group such as a methoxy group, an ethoxy group, a propoxy group, a butoxy group, a phenylmethoxy group, a phenylethoxy group, and the like; an aryloxy group having from 6 to 20 carbon atoms such as a phenoxy group, a methylphenoxy group, a dimethylphenoxy group, and the like; a phosphide group such as a dimethyl phosphide group, a methylphenyl phosphide group, a diphenyl phosphide group, a dicyclohexyl phosphide group, a dibenzyl phosphide group, and the like; an alkyl sulfide group such as a methyl sulfide group, an ethyl sulfide group, a propyl sulfide group, a butyl sulfide group, a hexyl sulfide group, a cyclohexyl sulfide group, an octyl sulfide group, and the like; an alkenyl sulfide group such as a vinyl sulfide group, a propenyl sulfide group, a cyclohexenyl sulfide group, and the like; an arylalkyl sulfide group such as a benzyl sulfide group, a phenylethyl sulfide group, a phenylpropyl sulfide group, and the like; an aryl sulfide group such as a phenyl sulfide group, a tolyl sulfide group, a dimethylphenyl sulfide group, a trimethylphenyl sulfide group, an ethylphenyl sulfide group, a propylphenyl sulfide group, a biphenyl sulfide group, a naphthyl sulfide group, a methylnaphthyl sulfide group, an anthracenyl sulfide group, a phenanthnyl sulfide group, and the like; a dimethyl boryl group; a diphenyl boryl group; a dimethyl arsenyl group; and so on.

As the amine to be contained in the amine-containing group, there is exemplified an amine having from 1 to 20 carbon atoms. Specific examples thereof include alkylamines such as methylamine, ethylamine, propylamine, butylamine, cyclohexylamine, methylethylamine, dimethylamine, diethylamine, dipropyamine, dibutylamine, dicyclohexylamine, methylethylamine, trimethylamine, triethylamine, tri-n-butylamine, and the like; alkenylamines such as vinylamine, propenylamine, cyclohexenylamine, divinylamine, dipropenylamine, dicyclohexenylamine, and the like; arylalkylamines such as phenylmethylamine, phenylethylamine, phenylpropylamine, and the like; arylamines such as diphenylamine, dinaphthylamine, and the like; ammonia; aniline; N-methylaniline; diphenylamine; N,N-dimethylaniline; methyldiphenylamine; pyridine; p-bromo-N,N-dimethylaniline; and so on.

As specific examples of the transition metal compound represented by the formula (I), there can be exemplified (1,1'-ethylene)(2,2'-ethylene)-bis(indenyl)zirconium dichloride, (1,1'-methylene)(2,2'-methylene)-bis(indenyl)zirconium dichloride, (1,1'-isopropylidene) (2,2'-isopropylidene)-bis(indenyl)zir conium dichloride, (1,1'-ethylene)(2,2'-ethylene)-bis(3-methylindenyl)zirconi um dichloride, (1,1'-ethylene)(2,2'-ethylene)-bis(4,5-benzoindenyl)zircon ium dichloride, (1,1'-ethylene) (2,2'-ethylene)-bis(4-isopropylindenyl)zirc onium dichloride, (1,1'-ethylene) (2,2'-ethylene)-bis(5,6-dimethylindenyl)zir conium dichloride, (1,1'-ethylene) (2,2'-ethylene)-bis(4,7-diisopropylindenyl) zirconium dichloride, (1,1'-ethylene) (2,2'-ethylene)-bis(4-phenylindenyl)zirconi um dichloride, (1,1'-ethylene) (2,2'-ethylene)-bis(3-methyl-4-isopropylind enyl)zirconium dichloride, (1,1'-ethylene) (2,2'-ethylene)-bis(5,6-benzoindenyl)zircon ium dichloride,

(1,1'-dimethylsilylene) (2,2'-dimethylsilylene)bis(indenyl) zirconium dichloride, (1,1'-dimethylsilylene) (2,2'-dimethylsilylene)bis(3-methyl indenyl)zirconium dichloride, (1,1'-dimethylsilylene) (2,2'-dimethylsilylene)bis(3-n-buty lindenyl)zirconium dichloride, (1,1'-dimethylsilylene) (2,2'-dimethylsilylene)bis(3-isopro pylindenyl)zirconium dichloride, (1,1'-dimethylsilylene) (2,2'-dimethylsilylene)bis(3-trimet hylsilylmethylindenyl)zirconium dichloride, (1,1'-dimethylsilylene) (2,2'-dimethylsilylene)bis(3-phenyl indenyl)zirconium dichloride, (1,1'-dimethylsilylene) (2,2'-dimethylsilylene)bis(4,5-benz oindenyl)zirconium dichloride, (1,1'-dimethylsilylene) (2,2'-dimethylsilylene)bis(4-isopro pylindenyl)zirconium dichloride, (1,1'-dimethylsilylene) (2,2'-dimethylsilylene)bis(5,6-dime thylindenyl)zirconium dichloride, (1,1'-dimethylsilylene) (2,2'-dimethylsilylene)bis(4,7-diis opropylindenyl)zirconium dichloride, (1,1'-dimethylsilylene) (2,2'-dimethylsilylene)bis(4-phenyl indenyl)zirconium dichloride, (1,1'-dimethylsilylene) (2,2'-dimethylsilylene)bis(3-methyl -4-isopropylindenyl)zirconium dichloride, (1,1'-dimethylsilylene) (2,2'-dimethylsilylene)bis(5,6-benz oindenyl)zirconium dichloride, and the like, and compounds obtained by substituting zirconium in the foregoing compounds with titanium or hafnium. As a matter of course, it should not be construed that the transition metal compound is limited thereto.

The α-olefin oligomer of the present invention can be produced by using the foregoing transition metal in a meso-symmetric form. According to transition metal compounds in a racemic form, which have hitherto been frequently used, it was difficult to produce an oligomer component under a mild condition; however, by using a transition metal compound in a meso-symmetric form, it has become possible to easily synthesize an oligomer. Of such transition metal compounds in a meso-symmetric form, in particular, by using a double-crosslinking type ligand, an α-olefin oligomer having a low content of dimer and having a composition close to a uniform composition can be stably synthesized with high activity even under a production condition of an ultra-low molecular weight material. In particular, in view of the fact that not only the two crosslinking groups in the transition metal compound are identical, but the structures of the two groups represented by E in the foregoing formula (I) are identical, it becomes possible to control the stereoregularity at the time of an insertion reaction of the monomer into the catalyst, and an α-olefin oligomer having a relatively low weight average molecular weight and narrow molecular weight distribution value and composition distribution can be produced.

As the component (B-1) of the component (B), any compound can be used so far as it is a compound capable of reacting with the transition metal compound of the component (A) to form an ionic complex. However, those represented by the following general formulae (V) and (VI) can be suitably used.

([L¹-R⁴]^{k+})ₐ([Z]⁻)_{b} (V)

([L²]^{k+})ₐ([Z]⁻)_{b} (VI)

(Here, L² is M², R⁵R⁶M³, R⁷₃C, or R⁸M³.)
[In the formulae (V) and (VI), L¹ represents a Lewis base. [Z]⁻represents a non-coordinating anion [Z¹]⁻ or [Z²]⁻, wherein [Z¹]⁻ represents an anion in which plural groups are bonded to an element, namely [M¹G¹G²... G^{f}]⁻ (wherein M¹ represents an element belonging to any one of the Groups 5 to 15 of the periodic table, and preferably an element belonging to any one of the Groups 13 to 15 of the periodic table; G¹ to G^{f} each represents a hydrogen atom, a halogen atom, an alkyl group having from 1 to 20 carbon atoms, a dialkylamino group having from 2 to 40 carbon atoms, an alkoxy group having from 1 to 20 carbon atoms, an aryl group having from 6 to 20 carbon atoms, an aryloxy group having from 6 to 20 carbon atoms, an alkylaryl group having from 7 to 40 carbon atoms, an arylalkyl group having from 7 to 40 carbon atoms, a halogen-substituted hydrocarbon group having from 1 to 20 carbon atoms, an acyloxy group having from 1 to 20 carbon atoms, an organometalloid group, or a hetero atom-containing hydrocarbon group having from 2 to 20 carbon atoms; two or more of G¹ to G^{f} may form a ring; and f represents an integer of [(valence of central metal M¹) + 1]); and [Z²]⁻ represents a conjugate base of a Broensted acid alone, or a combination of a Broensted acid and a Lewis acid, having a logarithm of a reciprocal of its acid dissociation constant (pKa) of not more than -10, or a conjugate base of an acid which is in general defined as a superstrong acid, or [Z²]⁻ may be coordinated with a Lewis base. Also, R⁴ represents a hydrogen atom, an alkyl group having from 1 to 20 carbon atoms, an aryl group having from 6 to 20 carbon atoms, an alkylaryl group, or an arylalkyl group; each of R⁵ and R⁶ represents a cyclopentadienyl group, a substituted cyclopentadienyl group, an indenyl group, or a fluorenyl group; R⁷ represents an alkyl group having from 1 to 20 carbon atoms, an aryl group, an alkylaryl group, or an arylalkyl group; and R⁸ represents a macrocyclic ligand such as tetraphenyl porphyrin, phthalocyanine, and the like. k is an ion valence of [L¹-R⁴] or [L²] and represents an integer of from 1 to 3; a represents an integer of 1 or more; and b is equal to (k x a). M² is one containing an element belonging to any one of the Groups 1 to 3, 11 to 13 and 17 of the periodic table; and M³ represents an element belonging to any one of the Groups 7 to 12 of the periodic table.]

Here, as specific examples of L¹, there canbe exemplified amines such as ammonia, methylamine, aniline, dimethylamine, diethylamine, N-methylaniline, diphenylamine, N,N-dimethylaniline, trimethylamine, triethylamine, tri-n-butylamine, methyldiphenylamine, pyridine, p-bromo-N,N-dimethylaniline, p-nitro-N,N-dimethylaniline, and the like; phosphines such as triethyl phosphine, triphenyl phosphine, diphenyl phosphine, and the like; thioethers such as tetrahydrothiophene and the like; esters such as ethyl benzoate and the like; nitriles such as acetonitrile, benzonitrile, and the like; and so on.
As specific examples of R⁴, there can be exemplified hydrogen, a methyl group, an ethyl group, a benzyl group, a trityl group, and so on; and as specific examples of R⁵ and R⁶, there can be exemplified a cyclopentadienyl group, a methylcyclopentadienyl group, an ethylcyclopentadienyl group, a pentamethylcyclopentadienyl group, and so on. As specific examples of R⁷, there can be exemplified a phenyl group, a p-tolyl group, a p-methoxyphenyl group, and so on; and as specific examples of R⁸, there can be exemplified tetraphenyl porphyrin, phthalocyanine, allyl, methallyl, and so on. Also, as specific examples of M², there can be exemplified Li, Na, K, Ag, Cu, Br, I, I₃, and so on; and as specific examples of M³, there can be exemplified Mn, Fe, Co, Ni, Zn, and so on. Also, in [Z¹]⁻, namely [M¹G¹G²···G^{f}], specific examples of M¹ include B, Al, Si, P, As, Sb, and so on, with B or Al being preferable. Also, specific examples of G¹ and G² to G^{f} include a dialkylamino group such as a dimethylamino group, a diethylamino group, and the like; an alkoxy group or an aryloxy group such as a methoxy group, an ethoxy group, an n-butoxy group, a phenoxy group, and the like; a hydrocarbon group such as a methyl group, an ethyl group, an n-propyl group, an isopropyl group, an n-butyl group, an isobutyl group, an n-octyl group, an n-eicosyl group, a phenyl group, a p-tolyl group, a benzyl group, a 4-t-butylphenyl group, a 3,5-dimethylphenyl group, and the like; a halogen atom such as fluorine, chlorine, bromine, and iodine; a hetero atom-containing hydrocarbon group such as a p-fluorophenyl group, a 3,5-difluorophenyl group, a pentachlorophenyl group, a 3,4,5-trifluorophenyl group, a pentafluorophenyl group, a 3,5-bis(trifluoromethyl)phenyl group, a bis(trimethylsilyl)methyl group, and the like; and an organometalloid group such as a pentamethylantimony group, a trimethylsilyl group, a trimethylgermyl group, a diphenylarsine group, a dicyclohexylantimony group, diphenylboron group, and the like.

As specific examples of the non-coordinating anion, namely the conjugate base [Z²]⁻ of a Broensted acid alone, or a combination of a Broensted acid and a Lewis acid, having a pKa of not more than -10, there can be exemplified a trifluoromethanesulfonic acid anion (CF₃SO₃)⁻, a bis(trifluoromethanesulfonyl)methyl anion, a bis(trifluoromethanesulfonyl)benzyl anion, a bis(trifluoromethanesulfonyl)amide anion, a perchloric acid anion (ClO4)⁻, a trifluoroacetic acid anion (CF₃CO₂)⁻, a hexafluoroantimony anion (SbF₆)⁻, a fluorosulfonic acid anion (FSO₃)⁻, a chlorosulfonic acid anion (ClSO₃)⁻, a fluorosulfonic acid anion/5-fluoroanitimony (FSO₃/SbF₅)⁻, a fluorosulfonic acid anion/5-fluoroarsenic (FSO₃/AsF₅)⁻, triluoromethanesulfonic acid anion/5-fluoroantimony (CF₃SO₃/SbF₅)⁻, and so on.

As specific examples of the ionic compound capable of reacting with the transition metal compound as the component (A) to form an ionic complex, namely the compound of the component (B-1), there can be exemplified triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluorophosphate, silver hexafluoroarsenate, sliver perchlorate, silver trifluoroaceate, silver trifluoromethanesulfonate, and so on. (B-1) may be used alone or in combination of two or more kinds thereof.

On the other hand, as the aluminoxane as the component (B-2), there can be exemplified a chain aluminoxane represented by the general formula (VII) and a cyclic aluminoxane represented by the general formula (VIII).

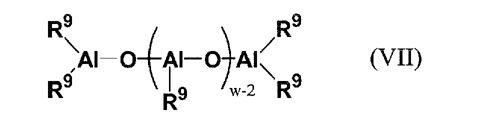

(In the formula, R⁹ represents a hydrocarbon group having from 1 to 20 carbon atoms, and preferably from 1 to 12 carbon atoms, such as an alkyl group, an alkenyl group, an aryl group, an arylalkyl group, and the like, or a halogen atom; and w represents an average degree of polymerization and is an integer of usually from 2 to 50, and preferably from 2 to 40, provided that each R⁹ may be the same as or different from every other R⁹.)

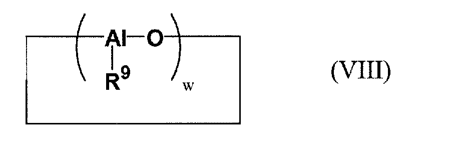

(In the formula, R⁹ and w are the same as those in the foregoing general formula (VII).)

As a production method of the foregoing aluminoxane, there is exemplified a method of bringing an alkylaluminum into contact with a condensing agent such as water and the like. However, its means is not particularly limited, and the reaction may be carried out according to known methods.
For example, there are (1) a method of dissolving an organoaluminum compound in an organic solvent and then bringing the solution into contact with water; (2) a method of adding an organoaluminum compound at the beginning of polymerization and then adding water; (3) a method of allowing an organoaluminum compound to react with crystal water contained in a metal salt or the like or absorbed water in an inorganic or organic material; (4) a method of allowing a trialkylaluminum to react with a tetraalkyldialuminoxane and further allowing the reaction mixture to react with water; and the like. Incidentally, the aluminoxane may be one insoluble in toluene, and such an aluminoxane may be used alone or in combination of two or more kinds thereof.

As for a use proportion of the catalyst component (A) and the catalyst component (B), in the case of using the compound (B-1) as the catalyst component (B), a molar ratio ranges preferably from 10/1 to 1/100, and more preferably from 2/1 to 1/10. The case where the molar ratio falls outside the foregoing range is not practical because a catalyst cost per unit mass polymer becomes high. Also, in the case of using the compound (B-2), it is desirable that a molar ratio ranges preferably from 1/1 to 1/1,000,000, and more preferably from 1/10 to 1/10, 000. The case where the molar ratio falls outside the foregoing range is not practical because a catalyst cost per unit mass polymer becomes high. Also, each of (B-1) and (B-2) can be used as the catalyst component (B) alone or in combination of two or more kinds thereof. Also, as for the polymerization catalyst at the production of the α-olefin oligomer of the present invention, an organoaluminum compound can be used as a component (C) in addition to the foregoing component (A) and component (B). Here, as the organoaluminum compound as the component (C), a compound represented by the general formula (IX) is used.

R¹⁰ᵥAlJ₃₋ᵥ (IX)

[In the formula, R¹⁰ represents an alkyl group having from 1 to 10 carbon atoms; J represents a hydrogen atom, an alkoxy group having from 1 to 20 carbon atoms, an aryl group having from 6 to 20 carbon atoms, or a halogen atom; and v represents an integer of from 1 to 3.]

Specific examples of the compound represented by the general formula (IX) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, and so on. Of these, organoaluminum compounds in which a hydrocarbon group having 4 or more carbon atoms is bonded are preferable from the standpoint of excellent high-temperature stability. From the subject viewpoint, a hydrocarbon group having from 4 to 8 carbon atoms is more preferable. Still more preferably, in the case of a reaction temperature of 100°C or higher, a hydrocarbon group having from 6 to 8 carbon atoms is still more preferable. The organoaluminum compound may be used alone or in combination of two or more kinds thereof.

It is desirable that a use proportion of the catalyst component (A) and the catalyst component (C) ranges preferably from 1/1 to 1/10,000, more preferably from 1/5 to 1/2, 000, and still more preferably from 1/10 to 1/1,000 in terms of a molar ratio. By using the catalyst component (C), polymerization activity per transition metal can be enhanced. However, its excessive use is not preferable because not only the organoaluminum compound becomes useless, but a large amount of the organoaluminum compounds remain in the α-olefin oligomer.

In the production of the α-olefin oligomer of the present invention, at least one member of the catalyst components can be supported on an appropriate carrier and used. The kind of the carrier is not particularly limited, and all of inorganic oxide carriers, other inorganic carriers, and organic carriers can be used. In particular, inorganic oxide carriers or other inorganic carriers are preferable.

Specifically, examples of the inorganic oxide carrier include SiO₂, Al₂O₃, MgO, ZrO₂, TiO₂, Fe₂O₃, B₂O₃, CaO, ZnO, BaO, ThO₂, and mixtures thereof, for example, silica alumina, zeolite, ferrite, glass fiber, and the like. Of these, SiO₂ or Al₂O₃ is especially preferable. Incidentally, the inorganic oxide carrier may contain a small amount of a carbonate, a nitrate, a sulfate, or the like. On the other hand, as carriers other than those described above, there can be exemplified magnesium compounds represented by a general formula: MgR¹¹ₓX¹_{y}, which are typified by MgCl₂, Mg(OC₂H₅)₂, and the like, and complex salts thereof, and so on. Here, R¹¹ represents an alkyl group having from 1 to 20 carbon atoms, an alkoxy group having from 1 to 20 carbon atoms, or an aryl group having from 6 to 20 carbon atoms; X¹ represents a halogen atom or an alkyl group having from 1 to 20 carbon atoms; and x is from 0 to 2, and y is from 0 to 2, provided that (x + Y) is equal to 2. Each R¹¹ and each X¹ may be the same as or different from every other R¹¹ and every other X¹, respectively.

As the organic carrier, there can be exemplified polymers such as polystyrene, a styrene-divinylbenzene copolymer, polyethylene, poly-1-butene, substituted polystyrenes, polyarylates, and the like; starch; carbon; and so on. As the carrier of the catalyst which is used for the production of the α-olefin oligomer of the present invention, MgCl₂, MgCl(OC₂H₅), Mg(OC₂H₅)₂, SiO₂, Al₂O₃, or the like is preferable. Also, although properties of the carrier vary depending upon its kind and production method, an average particle diameter is usually from 1 to 300 µm, preferably from 10 to 200 µm, and more preferably from 20 to 100 µm. When the particle diameter is small, a fine powder in the oligomer increases, whereas when the particle diameter is large, a coarse particle in the oligomer increases, thereby causing a lowering of bulk density or plugging of a hopper. Also, a specific surface area of the carrier is usually from 1 to 1,000 m²/g, and preferably from 50 to 500 m²/g, and a pore volume thereof is usually from 0.1 to 5 cm³/g, and preferably from 0.3 to 3 cm³/g. When any one of the specific surface area or the pore volume falls outside the foregoing range, there may be the case where the catalyst activity is lowered. Incidentally, the specific surface area and the pore volume can be, for example, determined by a volume of an adsorbed nitrogen gas in conformity with the BET method [see J. Am. Chem. Soc., 60, 309 (1983)].

Furthermore, in the case where the carrier is an inorganic oxide carrier, it is desirable to use it upon being burnt usually at from 150 to 1,000°C, and preferably from 200 to 800°C. In the case of supporting at least one member of the catalyst components on the carrier, it is desirable to support at least one of the catalyst component (A) and the catalyst component (B), and preferably both of the catalyst component (A) and the catalyst component (B). Although a method of supporting at least one of the catalyst component (A) and the catalyst component (B) on the carrier is not particularly limited, for example, there can be adopted (1) a method of mixing at least one of the catalyst component (A) and the catalyst component (B) with the carrier; (2) a method of treating the carrier with an organoaluminum compound or a halogen-containing silicon compound and then mixing the treated carrier with at least one member of the component (A) and the component (B) in an inert solvent; (3) a method of allowing the carrier to react with the component (A) and/or the component (B) and an organoaluminum compound or a halogen-containing silicon compound; (4) a method of supporting the component (A) or the component (B) on the carrier and then mixing the supported carrier with the component (B) or the component (A); (5) a method of mixing a catalytic reaction product between the component (A) and the component (B) with the carrier; (6) a method of allowing the carrier to coexist at a catalytic reaction between the component (A) and the component (B); and so on. Incidentally, in the foregoing methods (4), (5) and (6), the organoaluminum compound as the component (C) can also be added.

The thus obtained catalyst may be used for the polymerization after being taken out as a solid upon solvent evaporation, or may be used for the polymerization as it is. Also, in the production of the α-olefin oligomer of the present invention, the catalyst can be formed by carrying out a supporting operation of at least one member of the component (A) and the component (B) on the carrier. For example, there can be adopted a method in which at least one member of the component (A) and the component (B), the carrier and if desired, the organoaluminum compound as the component (C) are added, and then an olefin such as ethylene and the like is added at from 0.1 to 2 MPa(G), and the mixture is preliminarily polymerized at from-20 to 200°C for from about one minute to 2 hours, thereby forming a catalyst particle.

In the catalyst which is used in the production of the α-olefin oligomer of the present invention, it is desirable that a use proportion of the component (B-1) and the carrier is preferably from 1/5 to 1/10,000, and more preferably from 1/10 to 1/500 in terms of a mass ratio; and it is desirable that a use proportion of the component (B-2) and the carrier is preferably from 1/0.5 to 1/1,000, and more preferably from 1/1 to 1/50 in terms of a mass ratio. In the case of using a mixture of two or more kinds as the component (B), it is desirable that a use proportion of the respective component (B) and the carrier falls within the foregoing range in terms of a mass ratio. Also, it is desirable that a use proportion of the component (A) and the carrier is preferably from 1/5 to 1/10, 000, and more preferably from 1/10 to 1/500. When the use proportion of the component (B) [component (B-1) or component (B-2)] and the carrier, or the use proportion of the component (A) and the carrier, falls outside the foregoing range, there may be the case where the activity is lowered. An average particle diameter of the thus prepared polymerization catalyst is usually from 2 to 200 µm, preferably from 10 to 150 µm, and especially preferably from 20 to 100 µm; and a specific surface area thereof is usually from 20 to 1, 000 m²/g, and preferably from 50 to 500 m²/g. When the average particle diameter is less than 2 µm, there may be the case where a fine powder in the polymer increases, whereas when it exceeds 200 µm, there may be the case where a coarse particle in the polymer increases. When the specific surface area is less than 20 m²/g, there may be the case where the activity is lowered, whereas when it exceeds 1, 000 m²/g, there may be the case where a bulk density of the polymer is lowered. Also, in the catalyst which is used in the production of the α-olefin oligomer, an amount of the transition metal in 100 g of the carrier is usually from 0.05 to 10 g, and especially preferably from 0.1 to 2 g. When the amount of the transition metal falls outside the foregoing range, there may be the case where the activity is lowered. By achieving supporting on the carrier in this way, a polymer having an industrially advantageous high bulk density and an excellent particle size distribution can be obtained.

In the production method of the α-olefin oligomer of the present invention, a polymerization method is not particularly limited, and all of methods inclusive of a slurry polymerization method, a vapor phase polymerization method, a block polymerization method, a solution polymerization method, a suspension polymerization method, and the like may be adopted, with a slurry polymerization method or a solution polymerization method being especially preferable. As for a polymerization condition, a polymerization temperature is usually from 0 to 200°C, more preferably from 20 to 200°C, and especially preferably 70 to 200°C. Also, a use proportion of the catalyst relative to the reaction raw material is preferably from 1 to 10⁸, and especially preferably from 100 to 10⁵ in terms of a raw material monomer/the foregoing component (A) (molar ratio).

A polymerization time is usually from 5 minutes to 30 hours, and preferably from 15 minutes to 25 hours. A hydrogen pressure is usually from 0 to 10 MPa(G). In the production method of the α-olefin oligomer of the present invention, when hydrogen is added, the polymerization activity is largely enhanced. In consequence, the hydrogen pressure is preferably from 0.1 to 5.0 MPa(G), and more preferably from 0.1 to 1.0 MPa(G). The larger the addition amount of hydrogen, the more enhanced the polymerization activity is. However, even when the hydrogen pressure is more than 10 MPa(G), influences against the activity are a few, and a fault such as giant growth of production facilities, and the like is conversely caused.

In the case of using a polymerization solvent, there can be used an aromatic hydrocarbon such as benzene, toluene, xylene, ethylbenzene, decalin, and the like; an alicyclic hydrocarbon such as cyclopentane, cyclohexane, methylcyclohexane, and the like; an aliphatic hydrocarbon such as pentane, hexane, heptane, octane, and the like; a halogenated hydrocarbon such as chloroform, dichloromethane, and the like; and so on. Such a solvent may be used alone or in combination of two or more kinds thereof. Also, the polymerization can be carried out in the absence of a solvent depending upon the polymerization method.

In the polymerization, a polymerization catalyst may be prepared by carrying out preliminary polymerization. Although the preliminary polymerization can be, for example, carried out by bringing a small amount of an olefin into contact with the catalyst component, its method is not particularly limited, and known methods can be adopted. The olefin which is used for the preliminary polymerization is not particularly limited, and for example, there can be exemplified an α-olefin having from 3 to 18 carbon atoms, or a mixture thereof. However, it is advantageous to use the same olefin as the olefin used in the subject polymerization. Specific examples of the preliminary polymerization include an example in which the component (A), the component (B) and an α-olefin having from 3 to 18 carbon atoms are previously brought into contact with each other to prepare a polymerization catalyst; and an example in which the component (A), the component (B), the component (C) and an α-olefin having from 3 to 18 carbon atoms are previously brought into contact with each other to prepare a polymerization catalyst. A preliminary polymerization temperature is usually from -20 to 200°C, preferably from -10 to 130°C, and more preferably from 0 to 80°C. In the preliminary polymerization, an aliphatic hydrocarbon, an aromatic hydrocarbon, a monomer, or the like can be used as a solvent. Also, the preliminary polymerization may be carried out in the absence of a solvent. In the preliminary polymerization, it is desirable to regulate a condition in such a manner that an intrinsic viscosity [η] (as measured in decalin at 135°C) of a preliminarily polymerized product is 0.1 dL/g or more; and that an amount of the preliminarily polymerized product per millimole of the transition metal component in the catalyst is from 1 to 10,000 g, and especially from 10 to 1,000 g.

According to the foregoing method, the foregoing α-oligomer I or α-oligomer II can be produced. Examples of a method of varying the characteristics of the oligomer include selection of the kind and use amount of each of the catalyst components and the polymerization temperature, and in addition, polymerization in the presence of hydrogen, and so on. An inert gas such as nitrogen and the like may be made present. In the production method of the present invention, when the reaction is carried out at a high temperature, the degree of polymerization tends to become small, and also, when a monomer having a small carbon number is used, the degree of polymerization tends to become large.

### EXAMPLES

Next, the present invention is hereunder described in more detail with reference to the Examples, but it should not be construed that the present invention is limited thereto. Measurement methods and measurement apparatuses of physical properties are shown blow.

### [Mass ratio of dimer, trimer and tetramer]

0.05 g of a sample was dissolved in 5 mL of toluene and subjected to gas chromatography (GC) measurement, thereby determining a ratio of dimer, trimer and tetramer. GC measurement condition:
Column: HT-SIMDISTCB (5 m × 0.53 mmφ, film thickness: 0.17 µm)
Column temperature: 50°C (0.1 min), increased to 430°C at 20°C/min, 430°C (15 min)
Injection port (COC) temperature: Oven track
Detector (FID) temperature: 440°C
Carrier gas: He
Linear velocity: 40 cm/sec
Mode: Constant flow
Injection amount: 0.5 µL

### [Weight average molecular weight (Mw) and molecular weight distribution (Mw/Mn)]

A weight average molecular weight and a molecular weight distribution were measured by means of a gel permeation chromatography (GPC) method (as reduced into polystyrene). GPC measurement apparatus:
Column: TOSO GMHHR-H(S)HT
Detector: RI detector for liquid chromatography, WATERS 150C

### Measurement condition:

Solvent: 1,2,4-Trichlorobenzene
Measurement temperature: 145°C
Flow rate: 1.0 mL/min
Concentration of sample: 2.2 mg/mL
Injection amount: 160 µL
Calibration curve: Universal Calibration
Analysis program: HT-GPC (Ver. 1.0)

### [Measurement method of melting point]

A melting point was measured using a differential scanning calorimeter (DSC) under the following condition.
10 mg of a sample was kept in a nitrogen atmosphere at -10 C for 5 minutes; the temperature was then increased to 190°C at 10°C/min; furthermore, after keeping the sample at 190°C for 5 minutes, the temperature was decreased to -10°C at 5°C/min; and after keeping the sample at -10°C for 5 minutes, the temperature was increased to 190°C at 10°C/min.
A temperature of a peak of signal observed in the final temperature increasing process was defined as a melting point. Also, two points positioning on the both sides of the peak, whose values on the ordinate are a half value of the peak, were determined, and a distance therebetween was defined as a half value width (°C).

### [Content of vinylene group]

A number of terminal vinylidene groups was determined by means of the ¹H-NMR measurement according to a usual method. A content (C) of the vinylidene group (mol%) was calculated on the basis of a proportion of a side-chain methyl group appearing at from δ0.8 to 1.0 and a vinylidene group appearing at from δ4.8 to 4.6 (2H) as obtained by the ¹H-NMR measurement. Furthermore, a number of vinylidene groups per molecule was calculated from a number average molecular weight (Mn) and a monomer molecular weight (M) determined by the gel permeation chromatography (GPC) according to the following expression. Content (number) of terminal vinylidene groups per molecule = (Mn/M) × (C/100)

### [Production Example 1] Production of (1,1'-ethylene)(2,2'-ethylene)bis(indenyl)zirconium dichloride

### (1) Synthesis of 1,4-bis(phenylsulfonyl)butane:

Into a three-necked flask, sodium benzenesulfonate (75.0 g, 457 mmoles), tetrabutylammonium bromide (18.1 g), benzene (30 mL) and water (40 mL) were charged, to which was then added 1,4-dibromobutane (22.5 mL, 188 mmoles) at room temperature. After heating the mixture at 85°C for 8 hours, the temperature was returned to room temperature, and ethyl acetate (300 mL) was added. An organic layer was separated, and the organic layer was dried over anhydrous magnesium sulfate, followed by concentration under reduced pressure by using an evaporator. The obtained solid was recrystallized from methanol to obtain a desired material. Yield: 40.3 g, percent yield: 63.0 %.
This material was subjected to ¹H-NMR measurement, thereby obtaining the following results.
¹H-NMR (CDCl₃): 1.79 to 1.82 (m, 4H), 3.05 (br, t, J = 6.6 Hz, 4H), 7.52 to 7.83 (m, 10H)

### (2) Synthesis of 1,2-bis(2-indenyl)ethane:

1,4-Bis(phenylsulfonyl)butane (16.9 g, 50.0 mmoles) obtained above in (1) was dissolved in tetrahydrofuran (500 mL). After cooling to 0°C, 128 mL of a hexane solution of n-butyllithium in a concentration of 1.6 moles/L (n-butyllithium: 205 mmoles) was added. After one hour, a tetrahydrofuran solution (500 mL) of o-xylene dichloride (17.9 g, 102 mmoles) was added while vigorously stirring. Stirring was continued at room temperature for 2 hours. After cooling to -78°C, a hexane solution (256 mL) of n-butyllithium in a concentration of 1.6 moles/L and a tetrahydrofuran solution (250 mL) of lithium diisopropylamide prepared from diisopropylamine (57.7 mL) were slowly added. After 30 minutes, 5% hydrochloric acid (200 mL) was added at 0°C. The mixture was extracted with ethyl acetate, and a separated organic layer was dried over anhydrous magnesium sulfate. After concentration under reduced pressure, the resultant was subjected to Soxhlet extraction with hexane, thereby obtaining a desired material. Yield: 2.0 g, percent yield: 15 %.
This material was subjected to ¹H-NMR measurement, thereby obtaining the following results.
¹H-NMR (CDCl₃) : 2.82 (s, 4H), 3.36 (s, 4H), 6.57 (s, 2H), 7.11 to 7.28 (m, 8H)

### (3) Synthesis of (1,1'-ethylene)(2,2'-ethylene)bis(indene):

1,2-Bis(2-indenyl)ethane (2.0 g, 7.8 mmoles) obtained above in (2) was dissolved in tetrahydrofuran (120 mL) . After cooling to 0°C, 11.6 mL of a hexane solution of n-butyllithium in a concentration of 1.6 moles/L (n-butyllithium: 18.6 mmoles) was added. After 30 minutes, HMPAA (hexamethylphosphoric acid triamide) (3.4 mL, 15.6 mmoles) was added, the mixture was cooled to -78°C, and dibromoethane (0.76 mL, 7.7 mmoles) was added. After stirring at room temperature for 3 hours, water was added. After separating an organic layer, the organic layer was concentrated under reduced pressure by using an evaporator, and the obtained solid was recrystallized from hexane/methylene chloride (3/1) to obtain (1,1'-ethylene)(2,2'-ethylene)bis(indene). Yield: 1.0 g, percent yield: 45 %.
This material was subjected to ¹H-NMR measurement, thereby obtaining the following results.
¹H-NMR (CDCl₃) : 2.97 (5, 4H), 3.05 (5, 4H), 3.27 (s, 4H), 7.0 to 7.4 (m, 8H)

### (4) Synthesis of (1,1'-ethylene) (2,2'-ethylene)bis(indenyl)zirconium dichloride:

(1,1'-Ethylene)(2,2'--ethylene)bis(indene) (1.0 g, 3.5 mmoles) obtained above in (3) was dissolved in diethyl ether (80 mL), and after cooling to -78°C, 4.8 mL of a hexane solution of n-butyllithium in a concentration of 1.6 moles/L (n-butyllithium: 7.7 mmoles) was added. The mixture was stirred at room temperature overnight. The diethyl ether was evaporated off under reduced pressure. A obtained solid was washed with hexane to obtain a dilithium salt (1.15 g) of (1,1'-ethylene)(2,2'-ethylene)bis(indene). This lithium salt was dissolved in toluene (30 mL), a toluene suspension (50 mL) of zirconium tetrachloride (0.72 g, 3.1 mmoles) was slowly added in -78°C, and the mixture was stirred at room temperature overnight. The reaction liquid was filtered, and a filtrate was concentrated under reduced pressure. The obtained solid was recrystallized from hexane/toluene to obtain (1,1'-ethylene)(2,2'-ethylene)bis(indenyl)zirconium dichloride. Yield: 0.60 g, percent yield: 38 %.
This material was subjected to ¹H-NMR measurement, thereby obtaining the following results.
¹H-NMR (CDCl₃): 3.50 (d, 4H, -CH₂CH₂-), 3.76 (d, 4H, -CH₂CH₂-), 6.49 (s, 2H, olefinic proton), 6.90 to 7.50 (m, 8H, benzene ring proton)

### [Example 1] Reaction of 1-decene

Into a heat dried one-liter autoclave, 400 mL of 1-decene, 1 mmole of triisobutylaluminum, 2 µmoles of (1,1'-ethylene)(2,2'-ethylene)bis(indenyl)zirconium dichloride and 8 µmoles of tetrakispentafluorophenyl borate were charged, into which was further introduced 0.15 MPa(G) of hydrogen. The mixture was polymerized with stirring at a temperature of 80°C for one hour. After completion of the polymerization reaction, the reaction liquid was transferred into acetone. A precipitate was filtered and then heated and dried under reduced pressure to obtain 221 g of an α-olefin oligomer.

### [Example 2] Reaction of 1-tetradecene

Into a heat dried one-liter autoclave, 400 mL of 1-tetradecene, 1 mmole of triisobutylaluminum, 2 µmoles of (1,1'-ethylene)(2,2'-ethylene)bis(indenyl)zirconium dichloride and 8 µmoles of tetrakispentafluorophenyl borate were charged, into which was further introduced 0.15 MPa(G) of hydrogen. The mixture was polymerized with stirring at a temperature of 80°C for one hour. After completion of the polymerization reaction, the reaction liquid was transferred into acetone. A precipitate was filtered and then heated and dried under reduced pressure to obtain 235 g of an α-olefin oligomer.

### [Example 3] Reaction of 1-octadecene

Into a heat dried one-liter autoclave, 400 mL of 1-octadecene, 1 mmole of tri-n-hexylaluminum, 2 µmoles of (1,1'-ethylene)(2,2'-ethylene)bis(indenyl)zirconium dichloride and 8 µmoles of tetrakispentafluorophenyl borate were charged, into which was further introduced 0.2 MPa(G) of hydrogen. The mixture was polymerized with stirring at a temperature of 120°C for one hour. After completion of the polymerization reaction, the reaction liquid was transferred into acetone. A precipitate was filtered and then heated and dried under reduced pressure to obtain 210 g of an α-olefin oligomer.

### [Example 4] Reaction of α-olefins having from 20 to 24 carbon atoms

Into a heat dried one-liter autoclave, 400 mL of a mixture of α-olefins having 20, 22 and 24 carbon atoms, respectively in a % ratio of 42/36/21, 1 mmole of triisobutylaluminum, 2 µmoles of (1,1'-ethylene)(2,2'-ethylene)bis(indenyl)zirconium dichloride and 8 µmoles of tetrakispentafluorophenyl borate were charged, into which was further introduced 0.15 MPa(G) of hydrogen. The mixture was polymerized with stirring at a temperature of 80°C for one hour. After completion of the polymerization reaction, the reaction liquid was transferred into acetone. A precipitate was filtered and then heated and dried under reduced pressure to obtain 180 g of an α-olefin oligomer.

### [Example 5] Reaction of α-olefins having from 26 to 28 carbon atoms

Into a heat dried one-liter autoclave, 400 mL of a mixture of α-olefins having 26 and 28 carbon atoms, respectively in a % ratio of 62/42, 1 mmole of tri-n-hexylaluminum, 2 µmoles of (1,1'-ethylene)(2,2'-ethylene)bis(indenyl)zirconium dichloride and 8 µmoles of tetrakispentafluorophenyl borate were charged, into which was further introduced 0.2 MPa (G) of hydrogen. The mixture was polymerized with stirring at a temperature of 120°C for one hour. After completion of the polymerization reaction, the reaction liquid was transferred into acetone. A precipitate was filtered and then heated and dried under reduced pressure to obtain 160 g of an α-olefin oligomer.

### [Production Example 2] Production of (1,2'-dimethylsilylene)(2,1'-dimethylsilylene)bis(3-trimet hylsilylmethylindenyl)zirconium dichloride

Into a 200-mL Schlenk bottle, 2.5 g (7.2 mmoles) of (1,2'-dimethylsilylene)(2,1'-dimethylsilylene)bis(indene) and 100 mL of diethyl ether were charged in a nitrogen gas stream. Thereafter, the mixture was cooled to -78°C, 9.0 mL (14.8 mmoles) of a hexane solution of n-butyllithium (n-BuLi) (concentration: 1.6 moles/L) was added, and the temperature was then again returned to room temperature, followed by stirring for 12 hours.
The solvent was evaporated off from the resulting solution, and the residual solid was washed with 20 mL of hexane, followed by drying under reduced pressure. There was thus quantitatively obtained a lithium salt of (1,2'-dimethylsilylene)(2,1'-dimethylsilylene)bis(indene) as a white solid.

Subsequently, the foregoing lithium salt of (1,2'-dimethylsilylene)(2,1'-dimethylsilylene)bis(indene) (6.97 mmoles) was dissolved in 50 mL of tetrahydrofuran (THF) in the Schlenk bottle, to which was then slowly added dropwise 2.1 mL (14.2 mmoles) of iodomethyltrimethylsilane at room temperature, and the mixture was stirred for 12 hours.
After stirring, the solvent was distilled off, and 50 mL of diethyl ether was added. Furthermore, a saturated ammonium chloride aqueous solution was added thereto and washed. After separating an aqueous phase, an organic phase was dried, and the solvent was removed, thereby obtaining 3.04 g (5.9 mmoles) of (1,2'-dimethylsilylene)(2,1'-dimethylsilylene)bis(3-trimet hylsilylmethylindene) (percent yield: 84 %).

### Into a Schlenk bottle, 3.04 g (5.9 mmoles) of the foregoing

(1,2'-dimethylsilylene)(2,1'-dimethylsilylene)bis(3-trimet hylsilylmethylindene) and 50 mL of diethyl ether were charged in a nitrogen gas stream. The mixture was cooled to -78°C, 7.4 mL (11.8 mmoles) of a hexane solution of n-butyllithium (n-BuLi) (1.6 moles/L) was added, and the temperature was then returned to room temperature, followed by stirring for 12 hours.
The solvent was evaporated off from the solution after stirring, and the residual solid was washed with 40 mL of hexane, thereby obtaining 3.06 g of a diethyl ether adduct of lithium salt.
This diethyl ether adduct of lithium salt was subjected to ¹H-NMR measurement, thereby obtaining the following results.
¹H-NMR (90 MHz, THF-d8): δ0.04 (s, -SiMe₃, 18H), 0.48 (s, -Me₂Si-, 12H), 1.10 (t, -CH₃, 6H), 2.59 (s, -CH₂-, 4H), 3.88 (q, -CH₂-, 4H), 6.2 to 7.7 (m, Ar-H, 8H)

3.06 g of the foregoing diethyl ether adduct of lithium salt was suspended in 50 mL of toluene in a nitrogen gas stream, and the suspension was cooled to -78°C. A suspension of 1.2 g (5.1 mmoles) of zirconium tetrachloride in toluene, (20 mL), which had been previously cooled to -78°C, was added dropwise thereto, and the temperature was then returned to room temperature, followed by stirring for 6 hours.
The solvent of the obtained solution was evaporated off, and thereafter, the residual solid was recrystallized from dichloromethane, thereby obtaining 0.9 g (1.33 mmoles) of a yellow fine crystal of (1,2'-dimethylsilylene)(2,1'-dimethylsilylene)bis(3-trimet hylsilylmethylindenyl)zirconium dichloride (percent yield: 26 %).
This yellow fine crystal was subjected to ¹H-NMR measurement, thereby obtaining the following results.
¹H-NMR (90MHz, CDCl₃): δ0.0 (s, -SiMe₃-, 18H), 1.02, 1.12 (s, -Me₃Si-, 12H), 2.51 (dd, -CH₂-, 4H), 7.1 to 7.6 (m, Ar-H, 8H)

### [Comparative Example 1]

Into a heat dried one-liter autoclave, 400 mL of 1-octadecene, 1 mmole of triisobutylaluminum, 2 µmoles of (1,2'-dimethylsilylene)(2,1'-dimethylsilylene)bis(3-trimet hylsilylmethylindenyl)zirconium dichloride and 8 µmoles of tetrakispentafluorophenyl borate were charged, into which was further introduced 0.15 MPa(G) of hydrogen. The mixture was polymerized with stirring at a temperature of 90°C for one hour. After completion of the polymerization reaction, the reaction liquid was transferred into acetone. A precipitate was filtered and then heated and dried under reduced pressure to obtain 200 g of an α-olefin oligomer.

### [Comparative Example 2]

Into a heat dried one-liter autoclave, 400 mL of 1-decene, 1 mmole of triisobutylaluminum, 2 µmoles of a Strem's Cp*₂ZrCl₂ complex and 8 µmoles of tetrakispentafluorophenyl borate were charged, into which was further introduced 0.15 MPa(G) of hydrogen. The mixture was polymerized with stirring at a temperature of 90°C for one hour. After completion of the polymerization reaction, the reaction liquid was transferred into acetone. A precipitate was filtered and then heated and dried under reduced pressure to obtain 90 g of an α-olefin oligomer.

Physical properties of the α-olefin oligomers obtained in the foregoing Examples and Comparative Examples are shown in Table 1.

[Table 1]

**Table 1**

| | | Example | | | | | Comparative Example | |
|---|---|---|---|---|---|---|---|---|
| | | 1 | 2 | 3 | 4 | 5 | 1 | 2 |
| Polymerization condition | Transition metal compound | Production Examples 1 | Production Example 1 | Production Example 1 | Production Example 1 | Production Example 1 | Production Example 2 | CP*₂ZrCl₂ |
| | α-Olefin | 1-Decene | 1-Tetradecene | 1-Octadecene | C20-24 α-olefins | C26-28 α-olefins | 1-Octadecene | 1-Decene |
| Average molecular weight (Mw) | | 5000 | 4500 | 3000 | 5000 | 2800 | 31000 | 3200 |
| Molecular weight distribution (Mw/Mn) | | 1.4 | 1.3 | 1.1 | 1.4 | 1.1 | 1.9 | 1.2 |
| Conversion (% by mass) | | 83.1 | 74.2 | 63.5 | 52.7 | 48.9 | 67.3 | 41.6 |
| Component distribution (% by mass) | Dimer | 21.1 | 21.6 | 18.2 | 17,9 | 18.3 | 0.1 | 48.6 |
| | Trimer | 15.7 | 31.6 | 21.6 | 20.6 | 22.1 | 0.3 | 18.6 |
| | Tetramer | 9.2 | 22.4 | 17.4 | 15.7 | 17.3 | 1.0 | 10.6 |
| Mass ratio | Trimer/dimer | 0.74 | 1.46 | 1.2 | 1.2 | 1.2 | 3.0 | 0.38 |
| | Dimer/trimer | 1.3 | 0.7 | 0.8 | 0.9 | 0.8 | 0.33 | 2.6 |
| | Trimer/tetramer | 1.7 | 1.4 | 1.2 | 1.3 | 1.3 | 0.30 | 1.8 |
| Melting point (°C) | | - | 9.9 | 37.5 | 57.5 | 68.5 | 41.5 | - |
| DSC half value width (°C) | | - | 6.8 | 1.5 | 0.8 | 0.7 | 1.0 | - |
| Content of vinylidene group (mol%) | | 3.2 | 4.1 | 6.4 | 4.2 | 7.8 | 0.2 | 15.2 |
| Number of vinylidene groups per molecule | | 0.93 | 0.77 | 0.74 | 0.52 | 0.58 | 0.14 4 | 3.1 |

Comparative Examples 1 and 2 are concerned with oligomers according to a composition distribution following the Schulz-Flory distribution, and in particular, Comparative Example 2 is corresponding to a low molecular weight region. In this region, it is known that the dimer component is produced to an extent in the vicinity of 50 %. On the other hand, the oligomer of the present invention has such a characteristic feature that even when the weight average molecular weight is identical, the content of the dimer component decreases to not more than 20 %, whereas the trimer component increases, and it is noted that a material in which components causing a lowering of melting point are significantly inhibited can be produced.

### INDUSTRIAL APPLICABILITY

According to the present invention, there are provided an α-olefin oligomer with a small amount of a dimer component without following the Schulz-Flory distribution and a process for producing the same. Furthermore, according to the present invention, there are provided an α-olefin oligomer having a relatively low weight average molecular weight and narrow molecular weight distribution value and composition distribution, and a process for producing the same. Such an α-olefin oligomer is useful as a wax component or a lubricating oil component.

## Claims

1. An α-olefin oligomer comprising 90 mol% or more of an α-olefin unit having 6 or more carbon atoms and satisfying any one of the following (1) to (3):
(1) in a composition distribution where a mass ratio is dimer > trimer > tetramer, a trimer/dimer mass ratio is equal to or more than a tetramer/trimer mass ratio;
(2) in a composition distribution where a mass ratio is dimer < trimer < tetramer, a trimer/dimer mass ratio is equal to or more than a tetramer/trimer mass ratio; and
(3) in a composition distribution where a mass ratio is dimer < trimer > tetramer, a mass of the dimer is not more than 90 % of a mass of the trimer.

2. An α-olefin oligomer comprising 90 mol% or more of an α-olefin unit having 6 or more carbon atoms, having a weight average molecular weight (Mw) of not more than 9,000 and a molecular weight distribution (Mw/Mn) of not more than 2.0, and satisfying the following (4) and (5):
(4) a timer/dimer mass ratio of 1.0 or more; and
(5) a dimer/trimer mass ratio is equal to or less than a trimer/tetramer mass ratio.

3. The α-olefin oligomer according to claim 1 or 2, having a vinylidene group in a number of from 0.2 to 1.0 per molecule.

4. A process for producing an α-olefin oligomer comprising polymerizing an α-olefin having 6 or more carbon atoms in the presence of a polymerization catalyst containing (A) a transition metal compound represented by the following formula (I) and (B) at least one component selected from (B-1) a compound capable of reacting with the transition metal compound as the component (A) or a derivative thereof to form an ionic complex and (B-2) an aluminoxane: 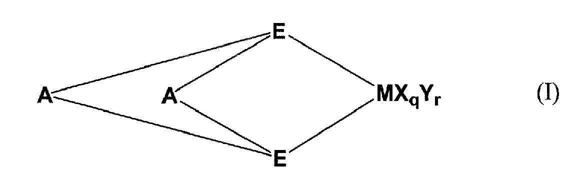 wherein
the compound represented by the formula (I) is a compound in a meso-symmetric form; and in the formula (I),
M represents a metal element belonging to any one of the Groups 3 to 10 of the periodic table,
X represents a σ-bonding ligand, and when plural Xs are present, each X may be the same as or different from every other X,
Y represents a Lewis base, and when plural Ys are present, each Y may be the same as or different from every other Y,
A represents a crosslinking group selected from a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, -SO₂-, -Se-, -NR¹-, -PR¹-, -P(O)R¹-, -BR¹-, and -AlR¹-, and two As are the same as each other,
R¹ represents a hydrogen atom, a halogen atom, a hydrocarbon group having from 1 to 20 carbon atoms, or a halogen-containing hydrocarbon group having from 1 to 20 carbon atoms,
q is an integer of from 1 to 5 and represents [(valence of M) - 2],
r represents an integer of from 0 to 3,
E represents a group represented by the following formula (II) or (III), and two Es are the same as each other: 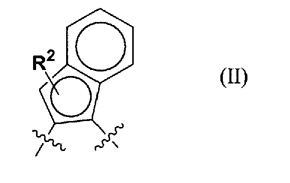 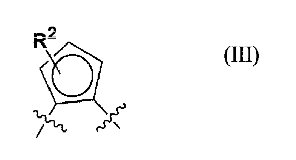 wherein
in the formulae (II) and (III), each R² independently represents a group selected from a hydrogen atom, a halogen atom, a hydrocarbon group having from 1 to 20 carbon atoms, a halogen-containing hydrocarbon group having from 1 to 4 carbon atoms, a silicon-containing group and a hetero atom-containing group,
when plural R²s are present, each R² may be the same as or different from every other R², and
a bond having a wave line represents the crosslinking group A.

5. The process for producing an α-olefin oligomer according to claim 4, wherein the crosslinking group A in the formula (I) is a group represented by the following formula (IV): 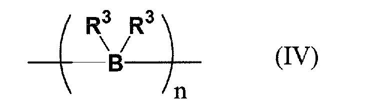 wherein
B is a skeleton of the crosslinking group and represents a carbon atom, a silicon atom, a boron atom, a nitrogen atom, a germanium atom, a phosphorus atom, or an aluminum atom.
R³ is a substituent of B and represents a hydrogen atom, a carbon atom, an oxygen atom, an aliphatic hydrocarbon group, an aromatic hydrocarbon group, an amine-containing group, or a halogen-containing group, and
n is 1 or 2.

6. The process for producing an α-olefin oligomer according to claim 4 or 5, wherein a polymerization catalyst composed of (C) an organoaluminum component in addition to the component (A) and the component (B) is used.

7. The process for producing an α-olefin oligomer according to any one of claims 4 to 6, wherein a polymerization catalyst obtained by previously bringing the component (A), the component (B) and an α-olefin having from 3 to 18 carbon atoms into contact with each other is used.

8. The process for producing an α-olefin oligomer according to claim 6, wherein a polymerization catalyst obtained by previously bringing the component (A), the component (B), the component (C) and an α-olefin having from 3 to 18 carbon atoms into contact with each other is used.

9. The process for producing an α-olefin oligomer according to any one of claims 4 to 8, wherein the reaction is carried out at a temperature of from 0 to 200°C.

10. The process for producing an α-olefin oligomer according to any one of claims 4 to 9, wherein the reaction is carried out under a hydrogen pressure in the range of from 0 to 10 MPa(G).

11. The process for producing an α-olefin oligomer according to claim 6, wherein an organoaluminum compound having a hydrocarbon group having 4 or more carbon atoms bonded thereto is used as the organoaluminum compound (C).

12. The process for producing an α-olefin oligomer according to any one of claims 4 to 11, wherein the α-olefin oligomer is an α-olefin oligomer comprising 90 mol% or more of an α-olefin unit having 6 or more carbon atoms and satisfying any one of the following (1) to (3):
(1) in a composition distribution where a mass ratio is dimer > trimer > tetramer, a trimer/dimer mass ratio is equal to or more than a tetramer/trimer mass ratio;
(2) in a composition distribution where a mass ratio is dimer < trimer < tetramer, a trimer/dimer mass ratio is equal to or more than a tetramer/trimer mass ratio; and
(3) in a composition distribution where a mass ratio is dimer < trimer > tetramer, a mass of the dimer is not more than 90 % of a mass of the trimer.

13. The process for producing an α-olefin oligomer according to in any one of claims 4 to 11, wherein the α-olefin oligomer is an α-olefin oligomer comprising 90 mol% or more of an α-olefin unit having 6 or more carbon atoms, having a weight average molecular weight (Mw) of not more than 9,000 and a molecular weight distribution (Mw/Mn) of not more than 2.0, and satisfying the following (4) and (5):
(4) a trimer/dimer mass ratio of 1.0 or more; and
(5) a dimer/trimer mass ratio is equal to or less than a trimer/tetramer mass ratio.
